# EUROPEAN PATENT APPLICATION

(11) **EP 1 096 474 A2**
(43) Date of publication of application: **02.05.2001**
(21) Application number: 00122384.1
(22) Date of filing: 25.10.2000
(51) Int. Cl.: G10L 17/00

(54) **Speaker verification system and method**

(30) Priority: 26.10.1999 US 427099
(71) Applicant: Persay Inc., c/o Corporation Service Company, Wilmington DE 19805 (US)
(72) Inventor: Peres, Renana, Givatayim 53257 (IL)
(74) Representative: VOSSIUS & PARTNER

(57) **Abstract**

A system for voice-based verification of the claimed identity of a speaker in a telephony environment includes an audio manager for receiving audio segments from at least one telephone trunk. The claimed identity belongs to a particular subscriber of a set of subscribers. The system also includes a trainer for producing a verification formula per subscriber from audio segments converted from voice samples of each subscriber, which were received during training sessions. The system also includes a recognizer for verifying, from audio segments of the speaker received during a recognition session and using the verification formula of the particular subscriber, whether the speaker is the particular subscriber. A method for voice-based verification of the claimed identity of a speaker in a telephony environment is also presented.

## Description

### FIELD OF THE INVENTION

The present invention relates to speaker verification, in general, and to speaker verification in a telephony environment, in particular.

### BACKGROUND OF THE INVENTION

Techniques for speaker verification (SV), in which the claimed identity of a speaker is verified, are well known in the art. There are generally two categories of techniques: text-dependent and text-independent. Text-dependent speaker verification requires the speaker to say a particular word or phrase, whereas text-independent speaker verification allows the speaker to talk freely.

Research into speaker recognition technologies has been very active in recent years, as described in the following texts, which are incorporated herein by reference:
H. Gish and M. Schmidt "Text Independent Speaker Identification", *IEEE Signal Processing Magazine*, Oct. 1994;
S. Furui, "An Overview of Speaker Recognition Technology", *Proceedings of the ESCA Workshop on Automatic Speaker Recognition, Identification and Verification*, Martigny, 1994;
A. Rosenberg and F.K. Soong, "Recent Research In Automatic Speaker Recognition", Advances in Speech Signal Processing, S. Furui and M.M. Sondhi, Eds., Marcel Dekker Inc., 1991; and
G.R. Doddington, "Speaker Recognition ― Identifying People by their Voices", *Proceedings of the IEEE* 73, no. 11, 1985.

In the past few years there have been a number of attempts to commercialize this technology, namely by T-NETIX, Inc. of Engelwood, Colorado, USA, Nuance Communications of Menlo Park, California, USA, and Keyware Technologies, Inc. of Woburn, Massachusetts, USA. The commercial applications have been geared towards desktop security and physical access (for example, at a border crossing or for access to an automated teller machine). Nuance Communications of Menlo Park, California, USA offers speaker recognition based on a limited vocabulary of digits. Current commercialized speaker recognition technology is text-dependent and is packaged either as software libraries or as complementary add-ons to speech recognition products.

US Patent No. 5,901,203 to Morganstein et al. discloses a computer-based system and method for identifying an unidentified caller.

### SUMMARY OF THE INVENTION

There is provided in accordance with a preferred embodiment of the present invention a system for voice-based verification of the claimed identity of a speaker in a telephony environment, the claimed identity belonging to a particular subscriber of a set of subscribers. The system includes an audio manager for receiving audio segments from at least one telephone trunk, a trainer for producing a verification formula per subscriber, and a recognizer. The verification formulas are produced from audio segments converted from voice samples of each subscriber, which were received during training sessions. The recognizer verifies, from audio segments of the speaker received during a recognition session and using the verification formula of the particular subscriber, whether the speaker is the particular subscriber.

Furthermore, in accordance with a preferred embodiment of the present invention, the system further includes a calibrator for producing a calibration formula representing the general population of subscribers from audio segments of the general population.

Preferably, the verification formula is based upon the calibration formula. Preferably, the system further includes a parameter for determining whether the calibrator produces the calibration formula when requested to do so by an external application or the calibrator produces the calibration formula automatically when the system has received enough audio segments of the general population.

Moreover, in accordance with a preferred embodiment of the present invention, the audio manager can receive a portion of the audio segments from an external application and another portion of the audio segments from a direct connection to the at least one telephone trunk.

Additionally, in accordance with a preferred embodiment of the present invention, the system further includes an audio pool for storing the audio segments and for providing the audio segments directly to the recognizer.

Furthermore, in accordance with a preferred embodiment of the present invention, the audio segments are voice over Internet protocol (VO/IP) data.

Moreover, in accordance with a preferred embodiment of the present invention, the audio segments are portions of a natural conversation with the speaker. Preferably, the recognizer verifies the claimed identity throughout the natural conversation.

Additionally, in accordance with a preferred embodiment of the present invention, the system further includes a database for storing the verification formula. Alternatively, in accordance with a preferred embodiment of the present invention, the verification formula is stored in an external database.

Moreover, in accordance with a preferred embodiment of the present invention, the system further includes a parameter for determining whether the trainer produces the verification formula for a specific subscriber when requested to do so by an external application or produces the verification formula for the specific subscriber automatically when the system has received enough audio segments converted from voice samples of the specific subscriber.

Furthermore, in accordance with a preferred embodiment of the present invention, the recognizer is a time-shared multi-process recognizer for performing multiple verification tasks in parallel on multiple speakers.

There is also provided in accordance with a preferred embodiment of the present invention a method for voice-based verification of the claimed identity of a speaker in a telephony environment, the claimed identity belonging to a particular subscriber of a set of subscribers. The method includes the steps of receiving audio segments from at least one telephone trunk, producing a verification formula per subscriber, and verifying, from audio segments of the speaker received during a recognition session and using the verification formula of the particular subscriber, whether the speaker is the particular subscriber. The verification formula is produced from audio segments converted from voice samples of each subscriber, which were received during training sessions.

### BRIEF DESCRIPTION OF THE DRAWINGS

The present invention will be understood and appreciated more fully from the following detailed description taken in conjunction with the appended drawings in which:
Fig. 1 is a schematic illustration of a speaker verification (SV) system in a telephony environment, according to a preferred embodiment of the present invention;
Fig. 2 is a schematic flowchart illustration of the operation of SV system of Fig. 1, according to a preferred embodiment of the present invention;
Fig. 3 is a block-diagram illustration of the SV system of Fig. 1, according to a preferred embodiment of the present invention;
Fig. 4 is a schematic illustration of the data flow in the SV system during calibration, according to a preferred embodiment of the present invention;
Fig. 5 is a schematic illustration of the data flow in the SV system during training, according to a preferred embodiment of the present invention; and
Fig. 6 is a schematic illustration of the data flow in the SV system during verification, according to a preferred embodiment of the present invention.

### DETAILED DESCRIPTION OF THE PRESENT INVENTION

The present invention is directed to a system and method for online voice-based verification of the claimed identity of a speaker in a telephony environment. The telephony environment may include regular telephone conversations or data sent over the Internet using voice over Internet Protocol (VO/IP). The system and method are language-independent and can be either text-dependent or text-independent. In the case of the text-independent system and method, verification during natural conversation is provided for the entire length of the conversation. The system and method enable speaker verification for multiple conversations in parallel.

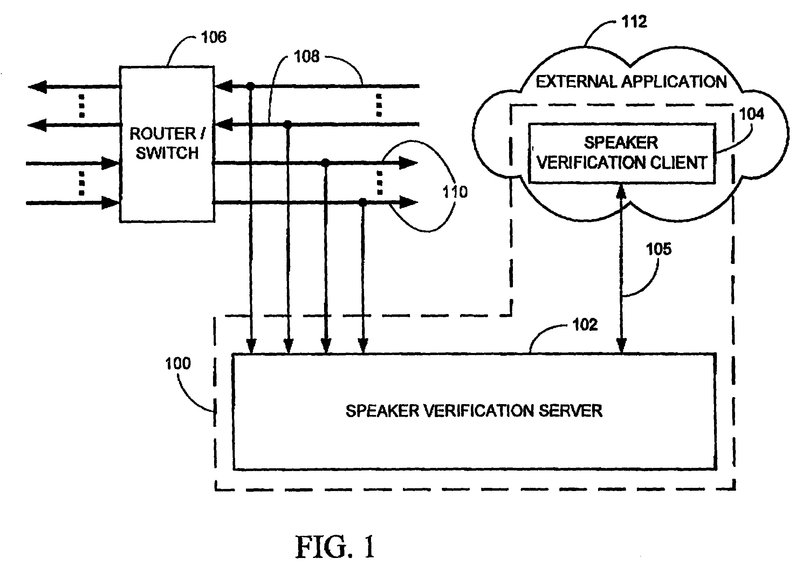

Reference is now made to Fig. 1, which is a schematic illustration of a speaker verification (SV) system 100 in a telephony environment, according to a preferred embodiment of the present invention. SV system 100 comprises a speaker verification server 102 and a speaker verification client 104, connected via a network 105.

A router or switch 106 has a plurality of incoming trunks 108 and a plurality of outgoing trunks 110. Throughout the specification and claims, the term "trunk" is used to mean either a telephone line carrying a single channel or a telephone line carrying multiple channels, for example, but not limited to, E1/T1 trunks and the like. Trunks 108 and 110 may be carrying telephone conversations or may be carrying Internet data, some of which is voice data sent over the Internet using the voice over Internet protocol (VO/IP).

SV client 104 is integrated into an external application 112 requiring speaker verification services. Any external application 112 that controls and manages the transfer of voice over telephone trunks or over a network can have SV client 104 integrated into it. Two non-limiting examples of such an external application 112 are a call center application and a cellular telephone network application. In the case of a call center application, external application 112 is a call center connected to switch 106. SV system 100 provides external application 112 with verification regarding the claimed identity of a person calling the call center. In the case of a cellular telephony environment, SV system 100 provides external application 112 with verification regarding whether the person speaking on the cellular telephone is the owner of the telephone.

According to a preferred embodiment of the present invention, SV server 102 captures audio samples directly from telephone trunks 108 and 110 online, handling multiple conversations in parallel. Alternatively, according to yet another preferred embodiment of the present invention, external application 112 supplies raw audio samples to SV client 104, which in turn provides them to SV server 102.

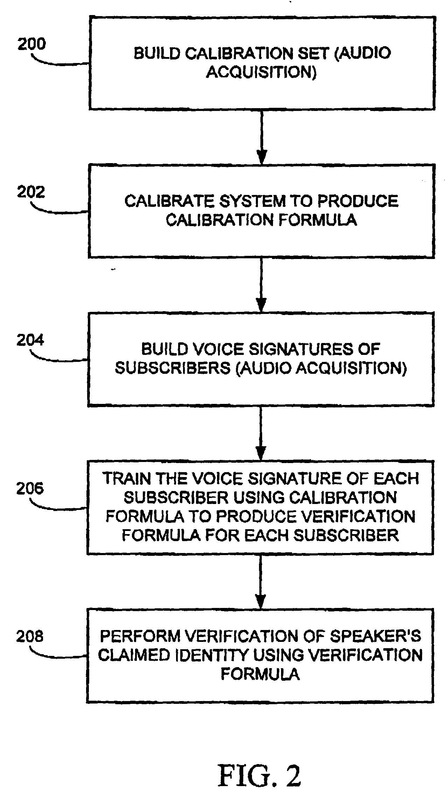

Reference is now made to Fig. 2, which is a schematic flowchart illustration of the operation of SV system 100 of Fig. 1, according to a preferred embodiment of the present invention. There are three stages to the operation of SV system 100: calibration (steps 200 and 202), training (steps 204 and 206), and verification (step 208).

The purpose of calibration is to teach SV system 100 the general features of various speakers. Calibration is required for reliable results and correct operation of SV system 100. Since calibration is usually needed only once for SV system 100, it is typically performed as part of the installation of SV system 100. In step 200, audio samples are acquired from a large amount of speakers, thereby building a "calibration set". The calibration set represents the subscribers' voices and is used for extracting their joint characteristics. When there is enough audio in the calibration set, a "calibration formula" to be used in the training process is produced (step 202). According to a preferred embodiment of the present invention, the calibration set requires audio from both males and females from conversations made over both fixed and cellular telephones before the calibration formula can be produced.

Once SV system 100 is calibrated, a "voice signature" is built using the first several conversations with a subscriber (step 204). A voice signature must be built for each subscriber who will subsequently be eligible for speaker verification. The subscriber's voice is captured from the conversations and accumulated until there is sufficient audio to train the voice signature. According to a preferred embodiment of the present invention, two to three minutes total of audio accumulated from at least three conversations is sufficient. A "verification formula" is produced by training the voice signature with the calibration formula (step 206). Training is the process of extracting the special voice characteristics of the subscriber and teaching SV system 100 to distinguish between the subscriber and others. The verification formula is used in the verification process.

Verification (step 208) involves comparing the characteristics of recorded audio with the verification formula in order to determine whether the speaker is who he or she claims to be.

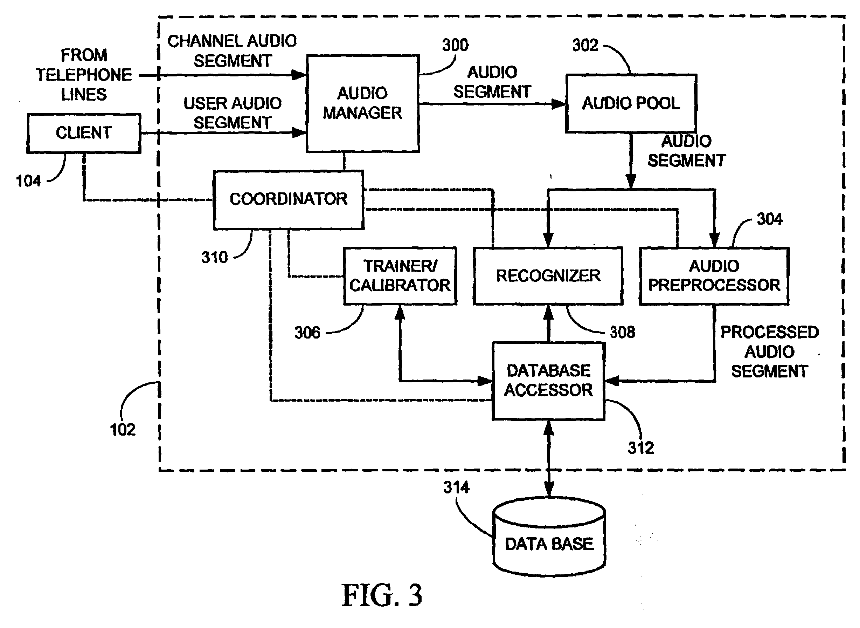

Reference is now made to Fig. 3, which is a block-diagram illustration of SV system 100 of Fig. 1, according to a preferred embodiment of the present invention. SV system 100 comprises SV server 102 and SV client 104. SV server 102 comprises an audio manager 300, an audio pool 302, an audio preprocessor 304, a trainer/calibrator 306, a recognizer 308, a coordinator 310 and a database-accessor 312. Database-accessor 312 is connected to a database 314 which is either external to SV server 102 (as shown), or internal to SV server 102 (not shown). Data flow is indicated in Fig. 3 by solid arrows, while control flow is indicated by dotted lines.

Coordinator 310 coordinates the operation of the other components, and is therefore connected by control flow to audio manager 300, audio preprocessor 304, trainer/calibrator 306, recognizer 308 and database-accessor 312. Coordinator 310 receives its instructions from SV client 104, to which it is connected by control flow.

Audio manager 300, which may be physically located on a different machine than the other components of SV server 102, is connected to SV client 104 and to audio pool 302. Audio pool 302 is connected to audio preprocessor 304 and to recognizer 308. Audio preprocessor 304, trainer/calibrator 306 and recognizer 308 are each connected to database-accessor 312.

Audio manager 300 comprises a processing unit, telephony interface cards and high-impedance splitter interface cards, all of which are well known in the art. The high-impedance splitter interface cards enable audio manager 300 to passively capture conversations on the telephone trunks. The telephony interface cards sample the voice on the telephone trunks, separate the two directions of conversation, and convert the voice samples to a digital stream of audio.

According to a preferred embodiment of the present invention, audio pool 302, audio preprocessor 304, trainer/calibrator 306, recognizer 308, coordinator 310 and database-accessor 312 are all implemented on a server computer having at least one central processing unit (CPU).

During audio acquisition, SV server 102 receives audio segments, either channel audio segments captured from telephone trunks by audio manager 300, or user audio segments provided to audio manager 300 by SV client 104. The audio segments may be either from regular telephone conversations or from voice data sent over the Internet using VO/IP. The audio segments are transferred from audio manager 300 to audio pool 302. If the audio segments are to be stored in database 314, either as part of the calibration set or as part of a subscriber's voice signature, then they must be preprocessed by audio preprocessor 304. If the audio segments are to be tested by recognizer 308, then they are not preprocessed.

Audio preprocessor 304 receives the audio segments from audio pool 302, processes them, and provides processed audio segments to database-accessor 312 for storage in database 314. The processing is LPC-based feature extraction, as is well known in the art. See for example L.R. Rabiner and R.W. Schafer, Digital Processing of Speech Signals, Prentice Hall, 1978, chapter 8, pp. 396 ― 461. The processed audio segments require less storage space in database 314 than raw audio segments. The features are not based on phonetic content, and are therefore language independent.

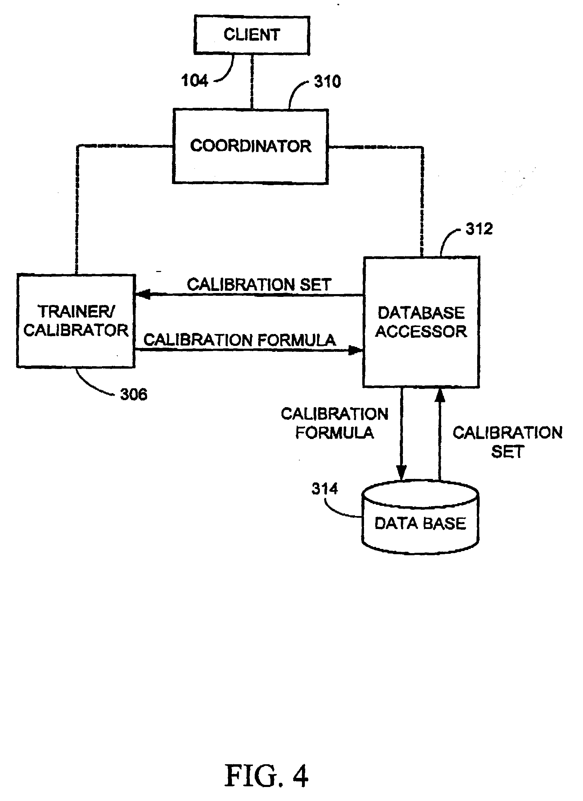

Reference is now made to Fig. 4, which is a schematic illustration of the data flow in SV system 100 during calibration, according to a preferred embodiment of the present invention. A system parameter set by the external application determines whether trainer/calibrator 306 performs calibration only when SV client 104 requests calibration via coordinator 310 or whether trainer/calibrator 306 performs calibration automatically when the calibration set contains sufficient audio. Database-accessor 312 provides the calibration set to trainer/calibrator 306, and trainer/calibrator 306 produces the calibration formula, which is then stored in database 314 by database-accessor 312. During calibration, trainer/calibrator 306 tunes various system parameters, builds a reference model to represent speakers who are not subscribers, and determines thresholds for use during verification.

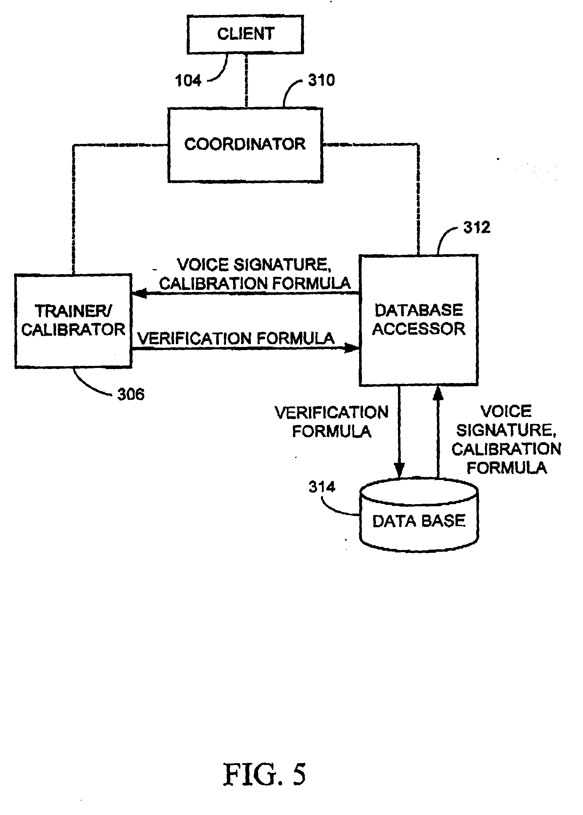

Reference is now made to Fig. 5, which is a schematic illustration of the data flow in SV system 100 during training, according to a preferred embodiment of the present invention. A system parameter set by the external application determines whether trainer/calibrator 306 performs training only when SV client 104 requests training via coordinator 310 or whether trainer/calibrator 306 performs training automatically when the voice signature contains sufficient audio. Database-accessor 312 provides the voice signature and the calibration formula to trainer/calibrator 306, and trainer/calibrator 306 produces the verification formula, which is then stored in database 314 by database-accessor 312. The verification formula is based upon both the voice signature and upon the calibration formula. The calibration formula comprises the reference model that represents speakers who are not subscribers.

Trainer/calibrator 306 extracts features from the speech in the processed audio segments that comprise the voice signature. The features extracted by trainer/calibrator 306 are not based on phonetic content, and therefore the verification formula produced by trainer/calibrator 306 is language independent. The features are classified according to standard classification techniques. Examples of such techniques for the case of text-independent verification include neural networks, Gaussian mixture model, vector quantization, and any combination thereof. Examples of such techniques for the case of text-dependent verification include Hidden Markov Models (HMM), dynamic time warping, vector quantization, and any combination thereof.

Even after trainer/calibrator 306 has trained the voice signature of a particular subscriber, thereby producing a verification formula for the subscriber, the verification formula may be further improved. Subsequent conversations with the subscriber can be captured and added to the voice signature, and training can be performed again in order to reline the verification formula. Once verification results using the verification formula saturate at a predetermined level, the voice signature of the subscriber can be deleted from database 314.

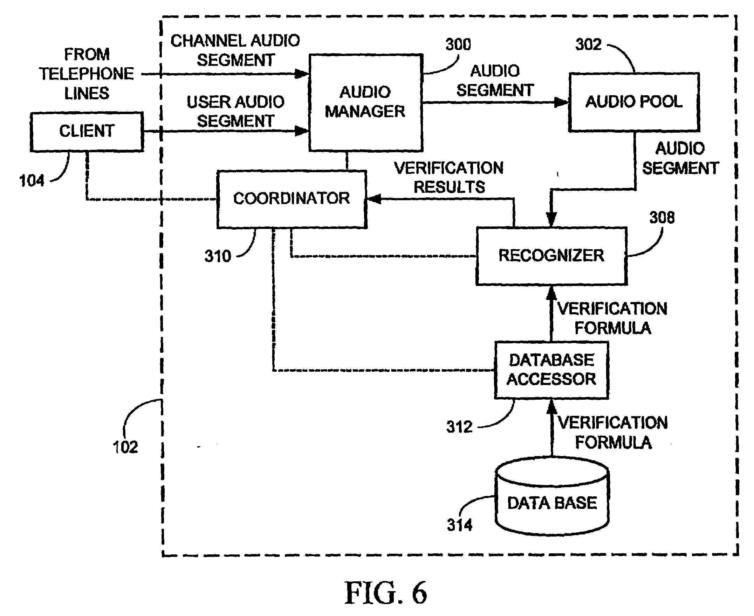

Reference is now made to Fig. 6, which is a schematic illustration of the data flow in SV system 100 during verification, according to a preferred embodiment of the present invention. A speaker claims to be a subscriber who is known to the external application. Audio segments are provided to SV server 102, either as user audio segments from SV client 104, or as channel audio segments captured from telephone trunks by audio manager 300. The audio segments, which may be either regular telephone audio segments or voice over IP audio segments, are stored in audio pool 302. Via coordinator 310, SV client 104 informs recognizer 308 which verification formula to use, and recognizer 308 gets the verification formula from database 314 via database-accessor 312. Recognizer 308 retrieves the audio segments from audio pool 302, analyzes them with the verification formula, and provides verification results to coordinator 310. Coordinator 310 passes the verification results on to SV client 104 for use by the external application.

Recognizer 308 performs LPC-based feature extraction on the audio segments retrieved from audio pool 302. The features are inserted into the verification formula in order to produce a score. The score is based on the likelihood that the speaker whose voice is captured in the audio segments retrieved from audio pool 302 is the subscriber whose identity is claimed and whose verification formula is used. The score is also based on the likelihood that the speaker is not the subscriber whose identity is claimed. The relation of the score to predetermined thresholds, set during the calibration process, determines the verification results.

As mentioned hereinabove, the speaker verification system and method of the present invention provides online voice-based verification of the claimed identity of a speaker in a telephony environment. The system and method enable speaker verification for multiple conversations in parallel. In the case of text-independent verification, verification is provided for the entire length of the conversation.

The ability of the system to perform speaker verification for multiple conversations in parallel is a direct result of the speed of the verification process. On a standard Pentium processor, recognizer 308 can analyze 1 minute of audio within approximately 2 ― 3 seconds. Therefore, recognizer 308 can analyze approximately 20 ― 30 multiple conversations simultaneously on a time-shared basis while maintaining online operation.

The online operation is a result of a number of factors: the separation of data flow and control flow in SV system 100, the direct access of recognizer 308 to audio pool 302, and the cumulative verification analysis of incoming audio.

As is evident from Figs. 2 and 6, data flow and control flow in SV system 100 are separate and occur in parallel. This is significant, because recognizer 308 can receive data (audio segments) from audio pool 302 at the same time or even before the control instruction to perform verification on the data arrives from coordinator 310.

According to a preferred embodiment of the present invention, approximately every 20 ― 50 milliseconds (msec), audio manager 300 builds a frame of the incoming audio segments and provides it to audio pool 302. Recognizer 308 has direct access to audio pool 302 (e.g. there is no buffering of the audio segments between audio pool 302 and recognizer 308), and immediately analyzes the frame with the verification formula, producing a verification result. Recognizer 308 then retrieves the next frame of incoming audio segments, analyzes them, producing a verification result, and combines the verification result for the current frame with the verification results of the previous frames.

It will be appreciated by persons skilled in the art that the present invention is not limited by what has been particularly shown and described herein above. Rather the scope of the invention is defined by the claims that follow:

## Claims

1. A system for voice-based verification of the claimed identity of a speaker in a telephony environment, the claimed identity belonging to a particular subscriber of a set of subscribers, the system comprising:
an audio manager for receiving audio segments from at least one telephone trunk;
a trainer for producing a verification formula per subscriber from audio segments converted from voice samples of each subscriber which were received during training sessions; and
a recognizer for verifying, from audio segments of the speaker received during a recognition session and using said verification formula of the particular subscriber, whether the speaker is the particular subscriber.

2. A system according to claim 1, the system further comprising:
a calibrator for producing a calibration formula representing the general population of subscribers from audio segments of said general population.

3. A system according to claim 2, wherein said verification formula is based upon said calibration formula.

4. A system according to claim 3, the system further comprising:
a parameter for determining whether said calibrator produces said calibration formula when requested to do so by an external application or said calibrator produces said calibration formula automatically when the system has received enough audio segments of said general population.

5. A system according to any of claims 1 to 4, wherein said audio manager receives said audio segments from an external application; or
wherein said audio manager is directly connected to said at least one telephone trunk; or
wherein said audio manager can receive a portion of said audio segments from an external application and another portion of said audio segments from a direct connection to said at least one telephone trunk.

6. A system according to any of claims 1 to 5, wherein said audio segments are voice over Internet protocol (VO/IP) data; and/or wherein said recognizer is a time-shared multi-process recognizer for performing multiple verification tasks in parallel on multiple speakers; and/or
the system further comprising:
an audio pool for storing said audio segments and for providing said audio segments directly to said recognizer;
and/or
a parameter for determining whether said trainer produces said verification formula for a specific subscriber when requested to do so by an external application or said trainer produces said verification formula for said specific subscriber automatically when the system has received enough audio segments converted from voice samples of said specific subscriber.

7. A system according to any of claims 1 to 5, wherein said audio segments are portions of a natural conversation with the speaker.

8. A system according to claim 7, wherein said recognizer verifies the claimed identity throughout said natural conversation.

9. A system according to any of claims 1 to 8, wherein said verification formula is stored in an external database or the system further comprising a database for storing said verification formula.

10. A method for voice-based verification of the claimed identity of a speaker in a telephony environment, the claimed identity belonging to a particular subscriber of a set of subscribers, the method comprising the steps of:
receiving audio segments from at least one telephone trunk;
producing a verification formula per subscriber from audio segments converted from voice samples of each subscriber which were received during training sessions; and
verifying, from audio segments of the speaker received during a recognition session and using said verification formula of the particular subscriber, whether the speaker is the particular subscriber.

11. A method according to claim 10, the method further comprising the step of:
producing a calibration formula representing the general population of subscribers from audio segments of said general population.

12. A method according to claim 11, wherein said verification formula is based upon said calibration formula.

13. A method according to claim 11, wherein said step of producing said calibration formula produces said calibration formula upon receipt of a request by an external application to do so or automatically when the system has received enough audio segments of said general population.

14. A method according to any of claims 10 to 13, wherein said received audio segments are received from an external application or via a direct connection to said at least one telephone trunk; or
wherein a portion of said audio segments are received from an external application and another portion of said audio segments are received from a direct connection to said at least one telephone trunk.

15. A method according to any of claims 10 to 13, wherein said audio segments are voice over Internet protocol (VO/IP) data;
and/or
the method further comprising the steps of:
storing said audio segments in an audio pool; and
providing said audio segments from said audio pool directly to said recognizer.

16. A method according to any of claims 10 to 13, wherein said audio segments are portions of a natural conversation with the speaker.

17. A method according to claim 16, wherein said step of verifying verifies the claimed identity throughout said natural conversation.

18. A method according to any of claims 10 to 17, the method further comprising the step of storing said verification formula in a database or in an external database.

19. A method according to any of claims 10 to 18, wherein said step of producing produces said verification formula for a specific subscriber upon receipt of a request by an external application to do so or automatically when enough audio segments converted from voice samples of said specific subscriber have been received.

20. A method for voice-based verification of the claimed identities of multiple speakers in a telephony environment, each of the claimed identities belonging to a particular subscriber of a set of subscribers, the method comprising the steps of:
receiving audio segments from at least one telephone trunk;
producing a verification formula per subscriber from audio segments converted from voice samples of each subscriber which were received during training sessions; and
verifying on a time-shared basis, from audio segments of each of the multiple speakers received during recognition sessions and using said verification formula of the particular subscriber, the claimed identities of each one of the multiple speakers.
